# FASCICULE DE BREVET EUROPEEN

(11) **EP 1 929 159 B1**
(45) Date de publication et mention de la délivrance du brevet: **26.08.2009**
(21) Numéro de dépôt: 06831233.9
(22) Date de dépôt: 27.09.2006
(51) Int. Cl.: F16B 5/01

(54) **DISPOSITIF POUR LA FIXATION D'UN PANNEAU LEGER SUR UN SUPPORT**
VORRICHTUNG ZUR BEFESTIGUNG EINER LEICHTEN PLATTE AN EINEM TRÄGER
DEVICE FOR FIXING A LIGHTWEIGHT PANEL ON A SUPPORT

(30) Priorité: 28.09.2005 FR 0552927
(43) Date de publication de la demande: 11.06.2008
(73) Titulaire: AIRBUS France, 31060 Toulouse Cedex 9 (FR)
(72) Inventeur: CIPRIAN, Danilo, F-31840 Aussonne (FR)
(74) Mandataire: Schmit, Christian Norbert Marie
(86) Numéro de dépôt international: PCT/FR2006/050946
(87) Numéro de publication internationale: WO 2007/036673

(56) Documents cités:
- FR-A- 2 864 940
- US-A- 4 399 642
- US-A- 5 230 485

## Description

La présente invention concerne un dispositif pour la fixation d'un panneau léger tel qu'un panneau à structure sandwich sur un support. Un autre objet de la présente invention est un véhicule de transport de passagers tel qu'un aéronef, comprenant de tels dispositifs de fixation. Un dispositif pour la fixation selon le préambule de la revendication 1 est connu du document US-A-4,399,642.

Les structures sandwich en matériau composite présentent des propriétés, notamment mécaniques, exceptionnelles pour une masse minimale. Ces structures sont donc largement mises en oeuvre dans l'industrie aéronautique (trappes, planchers, bords d'attaque, ailerons, cloisons intérieures, etc.).

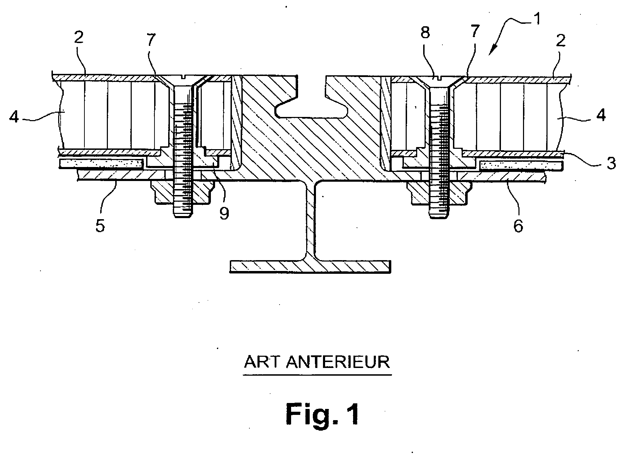

La Figure 1 représente schématiquement une vue partielle en coupe d'un plancher de cabine de l'art antérieur. Le plancher de sol est constitué de panneaux de plancher 1 à structure sandwich. Chaque panneau 1 comporte au moins deux parois 2, 3 disposées respectivement sur des faces opposées externes d'une âme en nid d'abeilles 4. Ces panneaux de plancher 1 qui sont de faible épaisseur, typiquement de l'ordre de 10 mm, sont fixés au moyen de boulons sur les brides latérales 5, 6 de rails de montage de sièges.

Le panneau 1 comprend également des renforts locaux 7 pour réaliser l'interfaçage des boulons et de la structure sandwich. Pour réaliser un tel renforcement, on peut utiliser un remplissage local du panneau ou installer un insert. Pour placer un tel insert dans le panneau, un évidement est typiquement formé à l'aide d'un outil coupant dans une des parois 2, 3 et sur une grande partie de l'épaisseur de l'âme 4. Un insert 7 métallique comprenant un corps 8 et une bride 9, ou tête large, est placé dans cet évidement de sorte que la bride 9 recouvre la surface externe de la paroi 2 comportant l'orifice. Une couche adhésive peut être disposée entre la bride 9 et la surface externe de la paroi 3 pour assurer l'étanchéité de la structure sandwich 1. Cette tête large 9 permet avantageusement de distribuer une contrainte locale telle que celle générée par un boulon sur une zone relativement large de la paroi 2, 3.

Bien entendu, l'évidement peut être débouchant, un orifice étant réalisé dans chacune des parois 2, 3 de sorte que le corps de l'insert 7 traverse l'épaisseur entière de l'âme 4.

Il est connu de laisser un jeu suffisant au niveau des perçages sur les supports de panneaux destinés à recevoir les boulons, pour permettre l'assemblage d'un panneau sur le support avec des tolérances de fabrication mais aussi permettre une interchangeabilité éventuelle. De plus, un joint d'étanchéité peut être placé entre le panneau et le support à la jonction par exemple entre deux panneaux, espaçant ainsi d'autant l'insert 7 du support. Une portion importante de la tige du boulon n'est donc pas prisonnière et est susceptible d'induire des contraintes sur l'insert 7 lors de l'assemblage du panneau sur le support. Les contraintes exercées sur l'insert 7 peuvent fragiliser l'âme de la structure sandwich, ce qui peut conduire à une détérioration sévère des propriétés mécaniques du panneau.

L'objectif de la présente invention est donc de proposer un dispositif pour la fixation d'un panneau léger, simple dans sa conception et dans son mode opératoire, économique, présentant une haute résistance à la corrosion tout en présentant une masse minimale et permettant de réaliser l'assemblage d'un panneau léger sur un support sans endommager ce panneau ou l'organe de fixation.

A cet effet, l'invention concerne un dispositif pour la fixation d'un panneau léger tel qu'un panneau à structure sandwich sur un support, compatible avec les tolérances de fabrication et garantissant l'interchangeabilité éventuelle tout en permettant un transfert de fortes charges dans le plan du panneau entre ce panneau et le support.

Ce dispositif comprend un insert comportant un corps principal creux et au moins une bride destinée à venir au moins partiellement en appui contre une face du panneau, l'insert étant destiné à recevoir un organe de fixation.

Selon l'invention, la bride **a** une surface externe comprenant des éléments de denture et le dispositif comprend une pièce en matériau ductile comportant une ouverture pour le passage de l'organe de fixation. Cette pièce est destinée à être placée entre la surface externe de la bride et le support sur lequel le panneau doit être fixé. Les éléments de denture sont destinés à coopérer, lors de la fixation dudit panneau sur le support, avec la pièce en matériau ductile pour réaliser cette fixation sans provoquer de déformation du panneau.

On entend ici par "matériau ductile", un matériau mou apte à se déformer plastiquement, de manière irréversible sous l'effet d'un effort. La denture vient ainsi déformer la pièce en matériau ductile par transmission des efforts de fixation du panneau à cette pièce de manière à ne pas provoquer de déformation du panneau.

Lors du démontage d'un panneau, cette pièce en matériau ductile peut avantageusement être remplacée très facilement par l'opérateur pour un coût minimal.

Le panneau léger est typiquement un panneau à structure sandwich comportant une âme en mousse ou en nid d'abeilles.

Dans différents modes de réalisation particuliers de ce panneau de plancher, chacun ayant ses avantages particuliers et susceptibles de nombreuses combinaisons techniques possibles:
- la bride au moins est en matériau métallique dur,
- l'insert est une pièce monobloc en matériau métallique dur,
- le matériau métallique dur est choisi dans le groupe comprenant l'acier, le titane, l'invar, un alliage d'aluminium.

L'invention concerne également un véhicule de transport de passagers tel qu'un aéronef comportant des panneaux solidaires de supports. Selon l'invention, ce véhicule comprend des dispositifs pour la fixation d'un panneau tels que décrit précédemment réalisant l'assemblage d'au moins un desdits panneaux sur au moins un desdits supports.

L'invention sera décrite plus en détail en référence aux dessins annexés dans lesquels:
- la figure 1 représente schématiquement une vue partielle en coupe d'un plancher de cabine de l'art antérieur;
- la figure 2 est une représentation schématique d'une vue partielle en coupe d'un panneau de plancher pour véhicule de transport de passagers comportant un dispositif pour la fixation de ce panneau selon un mode de réalisation de l'invention;
- la figure 3 représente schématiquement une vue en coupe agrandie de la liaison du panneau de plancher avec son support représentée sur la Figure 2 ;

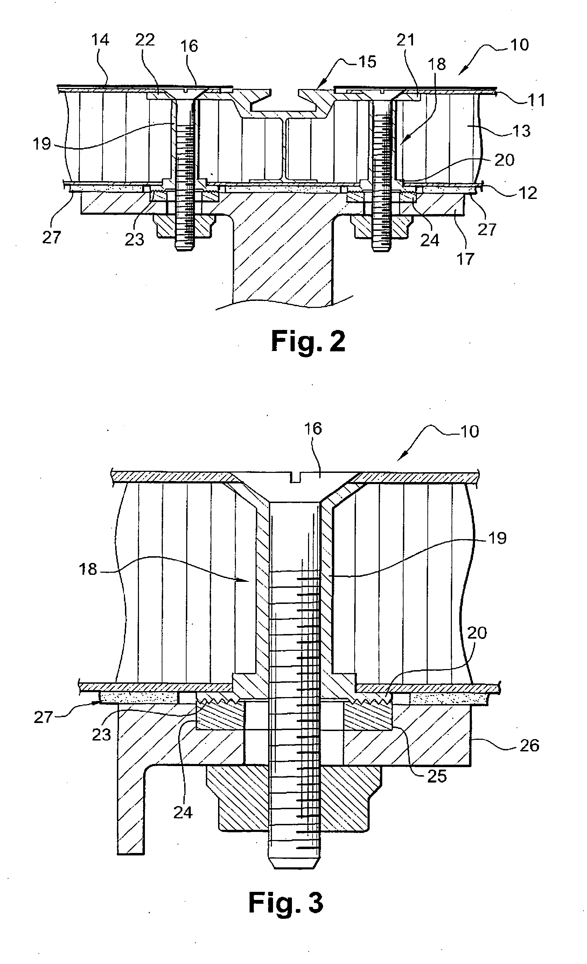

La Figure 2 montre un panneau de plancher pour véhicule de transport de passagers selon un mode de réalisation de l'invention. Le panneau de plancher 10 comporte une structure sandwich de coeur comprenant au moins deux parois 11, 12 disposées respectivement sur des faces opposées externes d'une âme en nid d'abeilles 13.

Ces parois 11, 12 sont des armatures de fibres. Les fibres peuvent être choisies dans le groupe, donné à titre non limitatif, comprenant les fibres de carbone, les fibres de graphite, les fibres de verre, les fibres de silice, les fibres de carbure de silicium ou tout autre fibre procurant la rigidité nécessaire tout en répondant à la contrainte de faible masse liée au domaine aéronautique.

L'âme en nid d'abeilles 13 est, par exemple, réalisée à partir d'aramide. Les fibres d'aramide présentent en effet une faible inflammabilité, une grande résistance à la rupture et un haut module d'élasticité.

Un revêtement de sol 14, par exemple une moquette, est placé sur le panneau de plancher 10. Ce revêtement 14 sert de protection des panneaux de plancher 10 pour la prévention des agressions liées aux déplacements ou à toute autre agression liée à l'occupation de la cabine du véhicule de transport.

Ce panneau de plancher 10 comporte au moins un rail de montage d'éléments d'aménagement et de sièges 15 en particulier, ayant un axe longitudinal, ce rail de montage 15 étant inséré au moins partiellement dans l'épaisseur du panneau. Un même panneau 10 peut, toutefois, comporter deux ou plusieurs rails 15 placés à différentes positions pour permettre des agencements d'aménagements au gré des besoins de l'utilisateur.

Le rail de montage 15 présente une section de rail inférieure ayant une coupe en forme de T inversé ou de Q. Il présente également une section de rail supérieure ayant une section en forme de C pour recevoir des moyens d'accouplement et de fixation des éléments d'aménagement, et en particulier des rails de siège.

La face supérieure du panneau de plancher 10 présente une ouverture allongée disposée suivant l'axe longitudinal du rail de montage 15 pour permettre la fixation des éléments d'aménagement.

Le panneau de plancher 10 est fixé par l'intermédiaire d'un organe de fixation 16 sur un support qui est dans le cas présent, une traverse 17 de support de plancher. L'organe de fixation 16 est un boulon en acier ou en titane. Une ou plusieurs couches telles qu'un joint d'étanchéité 27 peuvent être placées entre le panneau de plancher et le support 17. Ce joint d'étanchéité 27 peut être métallique, composite ou éventuellement en caoutchouc.

Le panneau 10 comprend des inserts 18 pour réaliser l'interfaçage de l'organe de fixation 16 du type boulon et de la structure sandwich. Chacun de ces inserts 18 comprend un corps principal creux 19 pour le passage d'un organe de fixation 16 et au moins une bride 20 venant prendre appui sur la face 12 du panneau de plancher destinée à être en contact avec le support. Une couche adhésive peut être avantageusement disposée entre la bride et la surface externe de la paroi 12 du panneau de plancher de manière à s'assurer de l'étanchéité de la structure sandwich.

L'insert 18 est assemblé à la structure sandwich de sorte que l'axe principal du corps cylindrique creux 19 est centré sur un trou correspondant des brides latérales 21, 22 du rail de montage de sièges. Cet insert 18 est une pièce monobloc en matériau métallique dur. De préférence, il est réalisé en titane, acier, Invar ou encore à partir d'un alliage en aluminium.

Dans un autre mode de réalisation, l'insert n'est pas constitué d'une seule pièce monobloc mais comporte au moins une bride 20 en matériau métallique dur fixée à un corps principal creux 19 en matériau composite ou en matériau plastique renforcé en fibres de carbone. L'assemblage de la ou des brides 20 sur ce corps principal creux 19 peut éventuellement être réalisé par l'intermédiaire d'une couche adhésive, du type époxy par exemple.

Cette bride a une surface externe comprenant des éléments de denture 23. La denture est de préférence réalisée annulairement sur la face externe de la bride 20 de manière à coopérer avec une rondelle 24 réalisée dans un matériau ductile tel que l'aluminium par exemple.

Cette rondelle 24 comporte une ouverture pour le passage de l'organe de fixation 16 et est placée entre la surface externe de la bride 20 et le support de panneau 17.

La Figure 3 montre une vue agrandie et en coupe de la fixation du panneau léger de la figure 2 sur son support. Les éléments de la Figure 3 portant les mêmes références que les éléments décrits à la Figure 2 représentent les mêmes objets. Pour assurer le transfert des efforts appliqués dans le plan du panneau léger dans la structure support, une pièce en matériau ductile 24 est placée dans un logement 25 réalisé dans le support de panneau 26. Ce support de panneau 26 est par exemple une traverse. Lors de l'installation de l'organe de fixation 16, cette pièce en matériau ductile 24 s'associe au corps principal creux 19 par déformation de la face de ce matériau ductile en contact avec le corps principal creux 19.

Pour assurer cette liaison, le corps principal creux 19 peut avoir une surface externe cylindrique présentant des éléments en relief. Ces éléments en relief fournissent des surfaces additionnelles pour la transmission des efforts vers l'âme de la structure sandwich. Ils comprennent à titre d'exemple une spirale. Alternativement, il peut s'agir d'une alternance de creux et de saillies, ces saillies ayant une section de forme carrée, rectangulaire ou tout autre forme appropriée.

Le dispositif de fixation de l'invention permet avantageusement, une fois la liaison réalisée, un transfert des efforts exercés dans le plan du panneau dans la structure support sans sollicitation de l'organe de fixation. Ce transfert des efforts permet de réaliser des perçages dans la structure support avec des diamètres nettement supérieurs aux diamètres des organes de fixation, de façon à être compatible avec les tolérances de fabrication et, éventuellement, de permettre l'interchangeabilité des panneaux légers.

## Revendications

1. Dispositif pour la fixation d'un panneau léger tel qu'un panneau à structure sandwich sur un support, ledit dispositif comprenant un insert (18) comportant un corps principal creux (19) et au moins une bride (20) destinée à venir au moins partiellement en appui contre une face dudit panneau, ledit insert (18) étant destiné à recevoir un organe de fixation (16), **caractérisé en ce que**
- ladite bride (20) a une surface externe comprenant des éléments de denture (23),
- le dispositif comprend une pièce (24) en matériau ductile comportant une ouverture pour le passage dudit organe de fixation (16), ladite pièce étant destinée à être placée entre la surface externe de ladite bride et ledit support,
et **en ce que** lesdits éléments de denture (23) sont destinés à coopérer, lors de la fixation dudit panneau sur le support, avec ladite pièce (24) pour réaliser cette fixation sans provoquer de déformation dudit panneau.

2. Dispositif selon la revendication 1, **caractérisé en ce que** ladite bride (20) au moins est en matériau métallique dur.

3. Dispositif selon la revendication 2, **caractérisé en ce que** l'insert (18) est une pièce monobloc en matériau métallique dur.

4. Dispositif selon la revendication 2 ou 3, **caractérisé en ce que** ledit matériau métallique dur est choisi dans le groupe comprenant l'acier, le titane, l'invar, un alliage d'aluminium.

5. Dispositif selon l'une quelconque des revendications 1 à 4, **caractérisé en ce que** ledit corps principal creux (19) a une surface externe cylindrique présentant des éléments en relief.

6. Dispositif selon l'une quelconque des revendications 1 à 5, **caractérisé en ce que** ladite pièce en matériau ductile (24) est une rondelle.

7. Dispositif selon la revendication 6, **caractérisé en ce que** ladite rondelle est en aluminium.

8. Véhicule de transport de passagers tel qu'un aéronef comportant des panneaux solidaires de supports de panneau, **caractérisé en ce qu'**il comprend des dispositifs pour la fixation d'un panneau selon l'une quelconque des revendications 1 à 7 réalisant l'assemblage d'au moins un desdits panneaux sur au moins un desdits supports (17, 26).

9. Véhicule selon la revendication 8, **caractérisé en ce que** lesdits supports de panneau (17, 26) sont des traverses.

10. Véhicule selon la revendication 8 ou 9, **caractérisé en ce que** lesdits panneaux comprennent des panneaux de plancher (10) comportant chacun au moins un rail de montage (15) ayant un axe longitudinal, inséré au moins partiellement dans l'épaisseur dudit panneau (10).

## Claims

1. A device for fixing a lightweight panel such as a panel with a sandwich structure on a support, said device comprising an insert (18) comprising a hollow main body (19) and at least one flange (20) intended to come at least partially in abutment against a face of said panel, said insert (18) being intended to receive a fixing member (16), **characterised in that**:
- said flange (20) has an external surface comprising tooth elements (23),
the device comprises a piece (24) made from ductile material comprising an opening for said fixing member (16) to pass, said piece being intended to be placed between the external surface of said flange and said support,
and **in that** said tooth elements (23) are intended to cooperate, when said panel is fixed to the support, with said piece (24) in order to achieve this fixing without causing deformation of said panel.

2. A device according to claim 1, **characterised in that** said flange (20) at least is made from hard metallic material.

3. A device according to claim 2, **characterised in that** the insert (18) is a single-piece part made from hard metallic material.

4. A device according to claim 2 or 3, **characterised in that** said hard metallic material is chosen from the group comprising steel, titanium, invar and an aluminium alloy.

5. A device according to any one of claims 1 to 4, **characterised in that** said hollow main body (19) has a cylindrical external surface having elements in relief.

6. A device according to any one of claims 1 to 5, **characterised in that** said piece made from ductile material (24) is a washer.

7. A device according to claim 6, **characterised in that** said washer is made from aluminium.

8. A passenger transport vehicle such as an aircraft comprising panels secured to panel supports, **characterised in that** it comprises a device for fixing a panel according to any one of claims 1 to 7 effecting the assembly of at least one of said panels on one of said supports (17, 26).

9. A vehicle according to claim 8, **characterised in that** said panel supports (17, 26) are cross-members.

10. A vehicle according to claim 8 or 9, **characterised in that** said panels comprise floor panels (10) each comprising at least one mounting rail (15) having a longitudinal axis, at least partially inserted in the thickness of said panel (10).

## Patentansprüche

1. Vorrichtung zum Befestigen einer leichten Platte wie etwa einer Platte mit Sandwich-Struktur an einem Träger, wobei die Vorrichtung einen Einsatz (18) umfasst, der einen hohlen Hauptkörper (19) und wenigstens einen Flansch (20), der dazu bestimmt ist, wenigstens teilweise an einer Fläche der Platte in Anschlag zu gelangen, aufweist, wobei der Einsatz (18) dazu bestimmt ist, ein Befestigungsorgan (16) aufzunehmen, **dadurch gekennzeichnet, dass**
- der Flansch (20) eine äußere Oberfläche besitzt, die Zahnungselemente (23) aufweist,
- die Vorrichtung ein Teil (24) aus einem verformbaren Material umfasst, das eine Öffnung für den Durchgang des Befestigungsorgans (16) aufweist, wobei das Teil dazu bestimmt ist, zwischen der äußeren Oberfläche des Flansches und dem Träger angeordnet zu werden, und
dass die Zahnungselemente (23) dazu bestimmt sind, bei der Befestigung der Platte an dem Träger mit dem Teil (24) zusammenzuwirken, um diese Befestigung zu verwirklichen, ohne eine Verformung der Platte hervorzurufen.

2. Vorrichtung nach Anspruch 1, **dadurch gekennzeichnet, dass** wenigstens der Flansch (20) aus einem Hartmetallmaterial besteht.

3. Vorrichtung nach Anspruch 2, **dadurch gekennzeichnet, dass** der Einsatz (18) ein Monoblockteil aus einem Hartmetallmaterial ist.

4. Vorrichtung nach Anspruch 2 oder 3, **dadurch gekennzeichnet, dass** das Hartmetallmaterial aus der Gruppe gewählt ist, die aus Stahl, Titan, Invar und einer Aluminiumlegierung besteht.

5. Vorrichtung nach einem der Ansprüche 1 bis 4, **dadurch gekennzeichnet, dass** der hohle Hauptkörper (19) eine zylindrische äußere Oberfläche besitzt, die reliefartige Elemente aufweist.

6. Vorrichtung nach einem der Ansprüche 1 bis 5, **dadurch gekennzeichnet, dass** das Teil (24) aus verformbarem Material eine runde Scheibe ist.

7. Vorrichtung nach Anspruch 6, **dadurch gekennzeichnet, dass** die runde Scheibe aus Aluminium besteht.

8. Fahrgasttransportfahrzeug wie etwa ein Flugzeug, das mit Plattenträgern fest verbundene Platten enthält, **dadurch gekennzeichnet, dass** es Vorrichtungen zum Befestigen einer Platte nach einem der Ansprüche 1 bis 7 umfasst, die die Montage wenigstens einer der Platten an wenigstens einem der Träger (17, 26) verwirklichen.

9. Fahrzeug nach Anspruch 8, **dadurch gekennzeichnet, dass** die Plattenträger (17, 26) Querstreben sind.

10. Fahrzeug nach Anspruch 8 oder 9, **dadurch gekennzeichnet, dass** die Platten Deckenplatten (10) umfassen, die jeweils wenigstens eine Montageschiene (15) mit einer Längsachse aufweisen, die wenigstens teilweise in die Dicke der Platte (10) eingesetzt ist.
